# EUROPEAN PATENT APPLICATION

(11) **EP 2 353 383 A2**
(43) Date of publication of application: **10.08.2011**
(21) Application number: 11153856.7
(22) Date of filing: 09.02.2011
(51) Int. Cl.: A01N 1/02

(54) **Closed ultra-rapid cell vitrification device and sealing procedure of the device**

(30) Priority: 09.02.2010 ES 201030167
(71) Applicant: Criado Scholz, Enrique, E-23780 Jaen (ES); Montagner, Loretta, I-35137 Padua (IT)
(72) Inventor: Criado Scholz, Enrique, 23780, Jaen (ES)
(74) Representative: Pons Ariño, Angel

(57) **Abstract**

Avoids any risk of contamination, favoring and increasing the survival rate of human (oocytes, embryos or sperm, etc) or nonhuman cells (4) after thawing, featuring ultra-rapid cooling rates and the use of low concentrations of cryo-protectors. This device comprises a protective sheath (1) made of an inert, flexible and transparent material, inside of which a micro-capillary (2), preferably of quartz, is intended to house the cells (4) that are to be vitrified, the protective sheath (1) has been adapted to be protectively sealed at its superior extremity, thereby creating a hermetic seal of the device and preventing the entry of coolant (liquid nitrogen, slush or slurry) into the protective sheath (1 ).

## Description

### OBJECT OF THE INVENTION

The present invention relates to the field of culture or microorganism conservation and more specifically to the preservation of human, animal or plant cells.

The main object of the present invention is a closed vitrification device of a special application in reproductive medicine, to preserve oocytes, sperms, embryos, etc., preventing any risk of contamination, achieving vitrification with a low concentration of cryo-protectors and ultra-rapid cooling rates.

### BACKGROUND OF THE INVENTION

Actually there are two techniques to preserve cells: Slow freezing and vitrification.
- Slow freezing is based on controlling the cooling rate in order to create a balance between the various factors that cause cellular damage, among which are the formation of ice, fractures and excessive dehydration of the cell.

In 1986 Chen C. achieved the first ever birth obtained from cryo-preserved human oocytes following the application of this method, using a freezing protocol based on the addition of Dimethyl Sufoxide (DMSO). Since then the results have varied greatly, obtaining a low survival rate due to the intracellular formation of ice crystals or other damage such as, the alteration of the mitotic spindle and zona pellucida. It starts at room temperature reaching values up to -150°C, performing each stage with various decrease rates in temperature, ranging from -2°C , in the first stage, to -50°C in the final stage. Finally the capillaries containing the cells are transferred into tanks of liquid nitrogen at -196°C for storage.
- Vitrification is a procedure whereby liquid is solidified in a vitreous phase (not crystalline) with a rapid decrease in temperature and an increase in viscosity, avoiding the toxicity and formation of intracellular ice crystals that could damage the cell content. Several factors affect the probability of achieving an adequate vitrification, such as: cooling and heating rhythms, viscosity of the sample and volume of the sample.

Various methods exist to achieve vitrification, all using a high concentration of cryo-protecting agents (Ethylene Glycol, Dimethyl Sufoxide, 1,2-Propanediol, etc) reaching levels of 8M in some protocols. These cryo-protectors are very toxic to the cell at high concentrations and long periods of exposure. Very high cooling rates are necessary, in the order of tens of thousands of degrees per minute, immersing the sample directly into liquid nitrogen.

One of the vitrification techniques developed in recent years uses an open system of micro capillaries, of 0.1 to 0.4 mm internal diameter and 0.01 mm thick, as well as liquid nitrogen "slush", which is sub-cooled liquid nitrogen that presents a temperature of -210°C, lower than liquid nitrogen which is -196°C, to achieve an increase in cooling rates, achieving speeds of up to 250.000°C per minute, and consequently the possibility to reduce the concentration of cryo-protectors to 2M, only slightly toxic to the cell, increasing the possibility of development after thawing.

However, the former technique has the major inconvenient that contamination exists in open systems, the cells are in direct contact with liquid nitrogen, and stored in a single tank or container with other cryo-preserved cells. That is why the development of an effective system for sealing the micro-capillary is necessary, which can also withstand cryogenic temperatures.

### DESCRIPTION OF THE INVENTION

The present invention solves the aforementioned inconvenient by providing a closed ultra-fast device for vitrification which avoids any risk of contamination, favors and increases the survival of human (oocytes, embryos, sperm, etc.) or non-human cells after thawing and features ultra-fast cooling rates, it also uses low concentrations of cryo-protectors.

The closed cell vitrification device, object of the present invention, comprises a protective sheath, closed at its inferior extremity, preferably made of an inert, flexible and transparent material, the interior is intended to house a quartz micro-capillary containing the cells that will be vitrified, the protective sheath is adapted to be sealed at its superior extremity, thus establishing a hermetic seal of the device and preventing the entry of coolant into the protective sheath when placed in a storage container.

This coolant can be liquid nitrogen, which has a temperature of -196°C, "slush" or sub-cooled liquid nitrogen which has a temperature of -210°C or "slurry" which is a mixture of liquid nitrogen with different particles such as copper powder or sodium chloride, depending on the characteristics of the cells to cryo-preserve.

Sealing the superior extremity of the protective sheath could be achieved by ultrasonic sealing, or by applying heat using a heat seal, or by a radio-frequenzy seal.

Preferably, the protective sheath consists additionally of a weight element placed on the inferior extremity, which prevents buoyancy once immerged in the liquid nitrogen. This protective sheath has the capacity to resist very low temperatures, as well as the great expansion pressures exerted by the coolant.

It has been anticipated that the protective sheath has identification labels resistant to the coolant, or a sufficient area in which to write references or identification numbers.

All materials used to manufacture both the protective sheath and micro-capillary are biocompatible and adapted to be sterilized by irradiation, thus guaranteeing and ensuring their use with human cells.

According to another objective of the present invention, the procedure for sealing the closed vitrification device, once the cells are passed through the cryo-protective agents, and introduced into the micro-capillary is as follows:
- Immersion of the protective sheath in a coolant solution(liquid nitrogen, slush or slurry) in which the immersion is preferably performed completely, filling the protective sheath with coolant solution.
- Introduction of the micro-capillary into the protective sheath with the help of tweezers, allowing the micro-capillary to reach the bottom of the sheath.
- Extraction of the superior extremity of the protective sheath above the surface of the coolant solution, about 3cms, to determine the heating of the superior extremity by the room temperature, and evaporation of the coolant solution contained in the interior.

Seal the superior extremity of the protective sheath, thereby ultrasonic sealing or by applying heat with a heat seal.

Once the device is hermetically closed, you can then proceed to transfer and deposit in a general container where the cells remain stored along with many others, without them coming into contact, thus avoiding contamination.

### DESCRIPTION OF THE DRAWINGS

To complement the description and to aid a better comprehension of the characteristics of the invention, in accordance to a preferred practical embodiment, as an integral part of the description there is a set of drawings attached, by way of illustration not limitation, which represent the following:
Figure 1. - Shows an overview of the ultra-rapid closed cell vitrification device, object of the invention, where the protective sheath and the micro-capillary can separately be appreciated, and the presence of a weight element on the inferior extremity.
Figure 2. - Shows a perspective view of the micro-capillary, in which a possible way of depositing the cells can be appreciated, leaving three air spaces between each other to prevent further cell contamination.
Figure 3. - Shows a sectioned view of the device, hermetically closed and prepared to be deposited in the general container of liquid nitrogen where all the other cells are stored.

### PREFERRED EMBODIMENT OF THE INVENTION

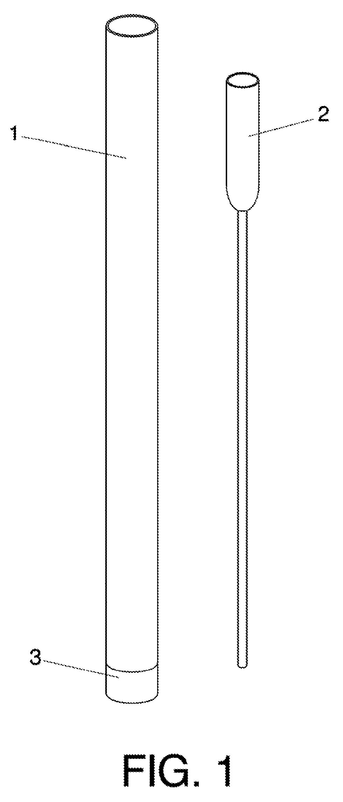

As shown in Figure 1 the ultra-rapid closed cell vitrification device includes a protective sheath (1) made of lonomeric resin, closed at its inferior extremity, and whose interior is designed to house a quartz micro-capillary (2) containing cells (4) that are to be vitrified, the protective sheath (1 ) has been adapted to be sealed at its superior extremity, establishing a hermetic seal of the device and preventing the entry of liquid nitrogen into the protective sheath (1).

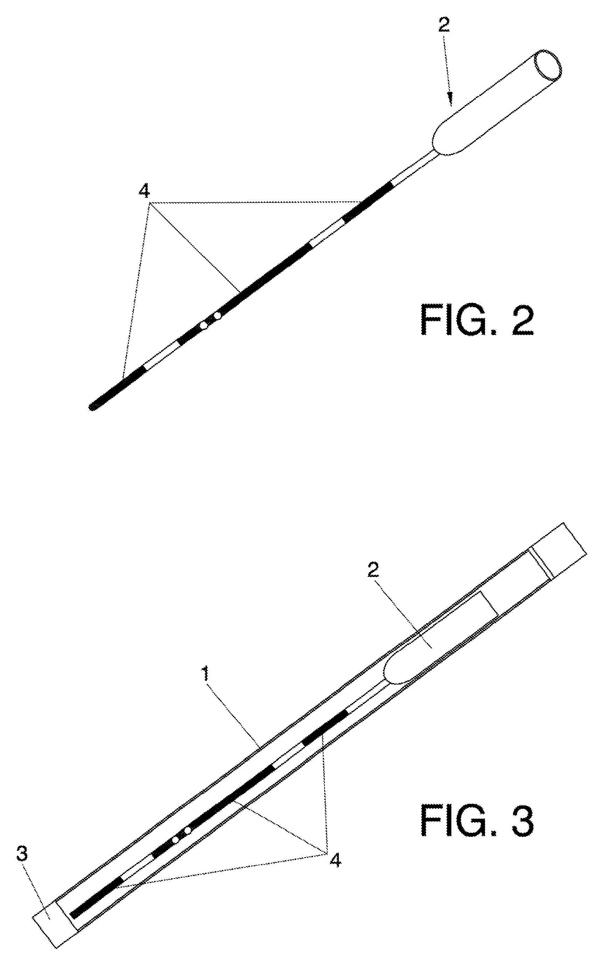

Also, as seen in Figures 1 and 3, the protective sheath (1) further comprises a weight element (3) located at the inferior extremity, which prevents the buoyancy of this once introduced into the liquid nitrogen.

Figure 2 shows a perspective view of the micro capillary (2), where the cells (4) contained within, have been deposited leaving three air spaces between them, in order to prevent further contamination between cells (4).

Figure 3 shows the device hermetically closed, with the micro-capillary (2) placed in the protective sheath (1), ready to be deposited in the general container of liquid nitrogen and kept there where the cells (4) will be stored along with many others without contact between them, thus avoiding contamination.

Using quartz micro-capillaries (2) to achieve high speeds of cooling and warming is motivated by the high thermal conductivity of quartz (6.5 W/mK, compared to the PVC of OPS capillaries, around 0.19 W/mK), as well as by the small inner diameter (between 0.1 mm and 0.4 mm) and the small size of the wall (0.01 mm) that can be achieved by the current state of techniques for this material. However, this micro-capillary (2) can be of any other material which has high thermal conductivity (plastic, glass, stainless steel, sapphire, gold, diamond, titanium, palladium, platinum, silver, etc).

## Claims

1. Closed ultra-fast cell vitrification device characterized as it consists of a protective sheath (1 ), sealed at the inferior extremity, the interior is intended to house a micro-capillary (2) which will contain a number of cells (4) for vitrification, the protective sheath (1) has been adapted to be protectively sealed at its superior extemity, to establish a hermetic seal of the device and prevent entry of coolant into the protective sheath (1).

2. Closed ultra-fast cell vitrification device, according to claim 1, characterized as the protective sheath (1) additionally consists of a weigh element (3) at the inferior extremity, which avoids buoyancy once submerged in the coolant.

3. Closed ultra-fast cell vitrification device, according to any of the previous claims, characterized as the protective sheath (1) is made of an inert, flexible and transparent material.

4. Closed ultra-fast cell vitrification device, according to any of the previous claims, characterized as the protective sheath (1) is made of ionomeric resin.

5. Sealing procedure of the Closed ultra-fast cell vitrification device described in claims 1 - 4, **characterized by** the following 4 stages:
- immersion of the protective sheath (1) in a coolant solution, filling the protective sheath (1) with coolant solution,
- Introduction of the micro-capillary (2), into the protective sheath (1),
- Extraction of the superior extremity of the protective sheath (1) above the surface of the coolant, approximately 3cms, to determine the heating of the superior extremity of the protective sheath (1) by the room temperature, and evaporation of the coolant contained in the interior,
- Seal the superior extremity of the protective sheath (1).

6. Sealing procedure, according to claim 5, characterized as the immersion of the protective sheath (1) in the coolant solution is performed completely.

7. Sealing procedure, according to claims 5 or 6, characterized as the coolant solution is liquid nitrogen, slush or slurry.

8. Sealing procedure, according to claim 5 or 6, characterized as the superior extremity of the protective sheath (1) is extracted approximately 3 cms above the surface of the coolant solution.

9. Sealing procedure, according to claims 5 or 6, characterized as the sealing is done ultrasonically.

10. Sealing procedure, according to claims 5 or 6, characterized as the sealing is done by applying heat with a heat seal.

11. Sealing procedure, according to claims 5 or 6, characterized as the sealing is done by a radio-frequenzy seal.
